# EUROPEAN PATENT APPLICATION

(11) **EP 1 598 728 A2**
(43) Date of publication of application: **23.11.2005**
(21) Application number: 05103626.7
(22) Date of filing: 02.05.2005
(51) Int. Cl.: G06F 1/00

(54) **Method and device for digital rights enforcement**

(30) Priority: 05.05.2004 SE 4012035
(71) Applicant: TeliaSonera AB, 10663 Stockholm (SE)
(72) Inventor: Kvarnström, Hakan, 167 37 Bromma (SE)
(74) Representative: Akerman, Marten Lennart

(57) **Abstract**

An arrangement (20) for digital rights enforcement of a data message initiated by a first user and transferred in a communication network by means of a Message System (10), comprising a Rights Manager (22) configured to receive and process a message initiated by said user, and to forward said processed message to a recipient; a Message Identifier (24) configured to identify the content of said message, and configured to generate a unique ID for said content; means for comparing the identification information to existing content identities comprised in a Message ID database (30); a Message Registration Authority (26) communicatively connected to said Rights Manager (22) and configured to register the content ownership and content ID in a Distribution Tree Database (28) and said Message ID database (30), respectively.

## Description

### FIELD OF THE INVENTION

The present invention relates in general to digital rights management in a communication network. More specifically the present invention refers to digital rights enforcement of user initiated data.

### BACKGROUND

Digital rights management (DRM) is a technique that aims to manage and enforce rights associated with digital content such as movies, music and pictures. Usually, content are created, owned and distributed by large companies which also control the rights to its use. The introduction of media enabled mobile devices (e.g. pictures, videos, music) introduce new opportunities for end-users to create and share their own content with friends, family and other users who might have an interest in a certain content. Current DRM systems allow super distribution of media files, which give end-users a chance to benefit from distributing content to others.

WO 02/103968 A1 discloses an arrangement and a method for content policy control in a mobile multimedia messaging system.

WO 03/040898 A1 discloses an arrangement and a method for content policy control with a trusted environment in a multimedia messaging system.

In both WO 02/103968 A1 and WO 03/040898 A1, the first delivery of a value added content that is subject to policy control has to be initiated from the network, i.e. published. The published content may then be distributed, i.e. forwarded, in a peer-to-peer fashion.

However, a drawback with the known systems is that the rights are not owned and controlled by end-users.

### SUMMARY OF THE INVENTION

The present invention relates in general to digital rights management in a communication network. More specifically the present invention refers to digital rights enforcement of user initiated data.

An object of the present invention is to overcome the above mentioned drawback with the known systems. Thus the present invention refers to an arrangement configured to allow end-users to register their locally produced content and hence configured to give them the benefit to own the rights to their work.

The present invention can be applied in any message-based distribution system available such as Mail, SMS and MMS.

The present invention is defined in the independent claims. Further embodiments of the invention are defined in the dependent claims.

### BRIEF DESCRIPTION OF THE DRAWINGS

The present invention will be described in more detail with reference to the accompanying drawings, in which:
FIG. 1 schematically shows an embodiment of the inventive arrangement;
FIG. 2 shows examples of mappings between various content and possible identification schemes;
FIG. 3 shows an example of a distribution tree; and
FIG. 4 schematically shows a flow chart of the present invention.

### DETAILED DESCRIPTION

In the description text the following abbreviations will be used:
- CID: Unique ID for the content
- DRM: Digital Rights Management
- DRUID: Device for Digital Rights Enforcement of User Initiated Data
- HTML: HyperText Markup Language
- IMEI: International Mobile Equipment Identity
- IMSI: International Mobile Subscriber Identity
- MMS: Multimedia Messaging Service
- MP3: MPEG Audio Layer 3
- MRA: Message Registration Authority
- SMS: Short Messaging Service
- XML: EXtensible Markup Language

The present invention will now be described in more detail with reference to the drawings.

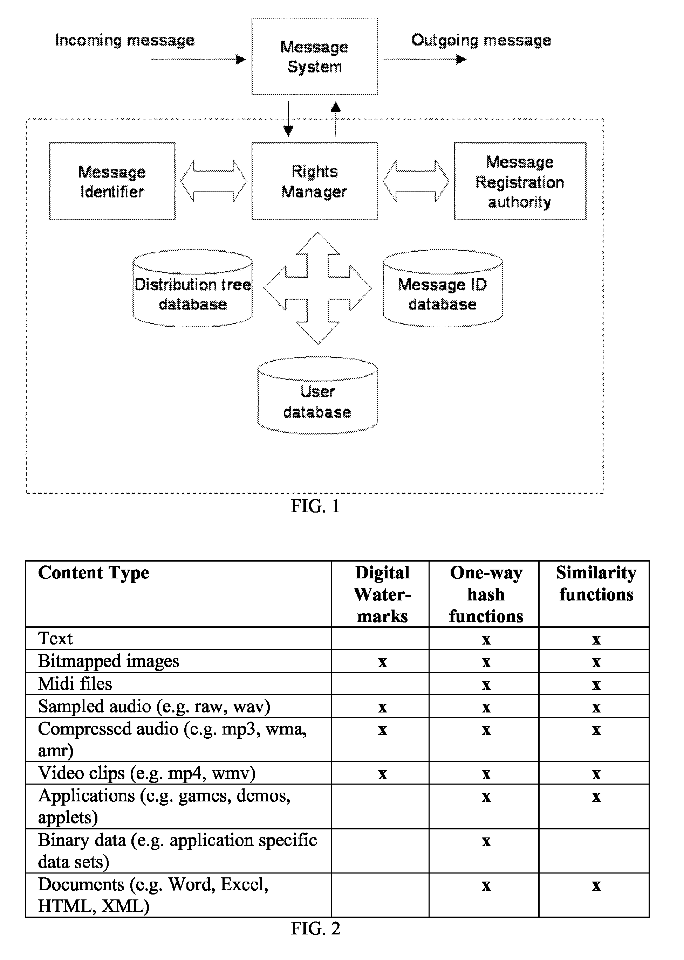

FIG. 1 shows an embodiment of the inventive arrangement 20 for digital rights enforcement of a data message initiated by a first user A and transferred in a communication network by means of a Message System 10. The arrangement comprises a Rights Manager 22 communicatively connected to the Message System 10 and configured to receive and process an incoming message initiated by said user, and to forward said processed message to a recipient B, C, D.

A Message Identifier 24 is communicatively connected to the Rights Manager 22 and configured to identify the content of said incoming message and an identification generator is communicatively connected to said Message Identifier 24 and configured to generate a unique ID for said content, CID.

The arrangement comprises further means for comparing the identification information to existing content identities comprised in a Message ID database 30.

A Message Registration Authority 26 is communicatively connected to the Rights Manager 22 and configured to register the content ownership and content ID in a Distribution Tree Database 28 and said Message ID database 30, respectively.

Further, the arrangement comprises means for updating the Distribution Tree Database 28 to include the ongoing distribution event if the CID exists in said Message ID Database 30.

The Rights Manager 22 is thus configured to have responsibility for receiving and processing of incoming messages. The Rights Manager 22 is arranged to coordinate and call other modules and functions, e.g. the Message System 10, a Message Identifier 24, a Message Registration Authority 26, storage structures 28, 30 and 32. After processing, the message is forwarded to its intended recipient. The flowchart of the working of the Rights Manager 22 will be described below.

The Message Identifier 24 is thus communicatively connected to the Rights Manager 22 and configured to identify the content of said incoming message. A unique ID for the content, CID, is generated by means of an Identification Generator (not shown). The Identification generator may be comprised in said Message Identifier 24, but it may also be communicatively connected to said Message Identifier 24.

If the CID does not exist, the Rights manager 22 calls or activates the Message Registration Authority 26 to register the content ownership and content ID, CID, in a Distribution Tree Database 28 and a Message ID Database 30, respectively.

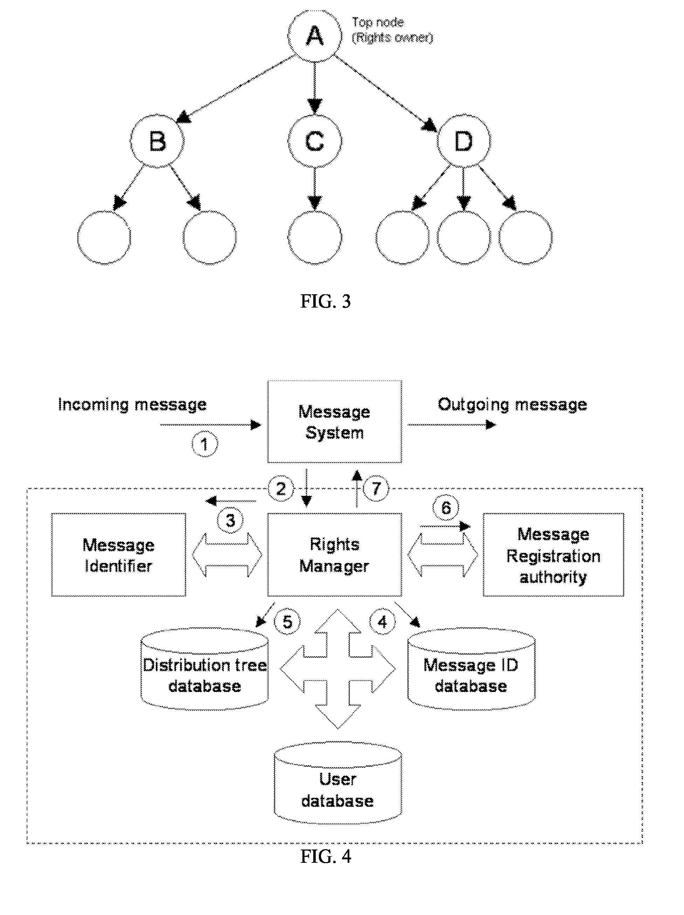

If the CID exists, the content Distribution Tree Database 28 is updated to include the ongoing distribution event, i.e. a new leaf-node 53 is added to the tree 50, cf. FIG. 3.

The CID can be calculated or generated using a message ID generator scheme. Depending on the nature of the content, different identification schemes may be used, cf. FIG. 2. Possible identification schemes include digital watermarks, one-way hash functions and similarity functions.

Digital watermarks can be integrated into the content to ensure re-identification of distributed messages. Digital watermarking, i.e. fingerprinting, allows rights owners to incorporate into their work identifying information invisible to the human eye. Depending on the nature of the content, different categories of digital watermarks may be applied, e.g. frequency domain transforms.

Watermarked content should preferably satisfy the following criteria:
- A watermark must be difficult or impossible to delete. At least without seriously degrading the quality of the original content.
- The watermark must survive extensive content modification, e.g., scaling, colour requantization, dithering, cropping, compression, audio re-sampling & re-encoding.
- A watermark should be imperceptible so as not to affect user experience while rendering the content.
- Watermarks should be readily detectable by the proper authorities.

One-way hash function can be used to identify content of any type. A one-way function takes a variable-length message and produces a fixed-length hash. Given the hash it is computationally infeasible to find a message with that hash. The one-way hash function returns a bit-string of k-bits which are unique for each input. However, different input may have identical hashes although with a negligible probability.

One-way hash functions should satisfy several criteria:
- Given x, h=f(x) should be easy to compute. The function f is a one-way hash function.
- Given h, it is computationally infeasible to compute x.

Similarity functions aim to find identify data which are similar under certain assumptions or in a certain context. Similarity functions need to be defined in relation to the domain of the content and its current context. Depending on the content type, several examples of similarity functions can be given, cf. Table I.

**Table I**

| Content Type | Possible similarity functions |
|---|---|
| Text | Soundex, histograms, statistical analysis |
| Audio | Pattern recognition techniques, power spectrum analysis, beat and rhythmic timeseries analysis |
| Images | Histograms, segmentation and feature detection |

The Message Registration Authority 26 is communicatively connected to the Rights Manager 22 and configured to register the content ownership and content ID in a Distribution Tree Database 28 and said Message ID database 30, respectively.

The message Registration Authority module 26 is thus configured to provide registration of previously unseen content which does not have an existing owner.

Firstly, the content ID, CID, is stored in the Message ID database 30, whereby the content can be identified in the future. Secondly, the user ID and a new top-node are written to the User Database 32 and Distribution Tree Database 28, respectively. In cases where digital watermarks are used as CID, the watermark is attached to the content.

The arrangement comprises also means for updating said Distribution Tree Database 28 to include the ongoing distribution event if the CID exists in said Message ID Database 30.

The Message System 10 is a message-based distribution system such as mail, SMS or MMS, and the data message is, or is an element of, a message from said message-based distribution system.

The Identification Generator is configured to generate said CID by means of a message ID generator scheme.

The message ID generator scheme comprises digital watermarks, one-way hash functions and/or similarity functions.

The arrangement comprises further a User Database 32 communicatively connected to said Rights manager 22 and configured to comprise user information, such as unique User ID, e.g. IMSI; operator ID; terminal identification Number, e.g. IMEI; terminal capabilities and/or context information.

The information in the Distribution Tree database 20 can be arranged in a distribution tree 50, cf. FIG. 3, configured to show how said content has been distributed from said first user A to a second user B, C, D, and configured to serve as a basis for revenue sharing and reverse billing mechanisms.

FIG. 3 shows a typical distribution tree 50. User A is the originator and owner of the content. He distributes it to three of his contacts B, C and D which in turns redistribute it to their contacts. Hence, the tree 50 grows exponentially with respect to the depth of the tree.

The Message ID Database 30 is configured to comprise identification elements, such as hashes, similarities measures, watermarks etc., for previously registered contents. Upon registration of content, the Message ID Database 30 is checked in order to ensure that the database 30 does not comprise an existing rights owner to the content.

A typical chain of events are shown in the flowchart in FIG. 4. The chain of events comprises the steps of:
1. a user is sending a newly created message to one or several recipients;
2. the inventive DRUID device 20 intercepts the message and sends it to the Rights Manager 22 for processing;
3. a Message Identifier 24 attempts to identify the incoming message by generating a unique ID;
4. performing a lookup of the ID in the Message ID database 30 in order to determine whether the content is previously known or owned by another user;
5. if the content is previously known, updating the Distribution Tree Database 28, i.e. adding a leaf node 53 to the contents existing distribution tree 51 (cf. FIG. 3);
6. if the content is new,
   - calling the Message Registration Authority 26, to register the content,
   - the Message Registration Authority 26 creates a new distribution tree 50 for the content having the originator of the message as owner A;
   - In addition, Message Registration Authority 26 may add digital watermarks to the content to ensure future identification.
7. forwarding the message to the intended recipient(-s).

The invention relates also to a method for digital rights enforcement of a data message initiated by a first user A and transferred in a communication network by means of a Message System 10. The method comprises the steps of:
- intercepting said message and sending said message to a Rights Manager 22 for processing;
- by means of a Message Identifier 24, identifying said incoming message and generating a unique content ID, CID;
- performing a lookup of the identification information in a Message ID database 30 to determine whether the content is previously owned by another user;
- if the content is previously owned, updating a Distribution Tree Database 28;
- if the content is new, calling said Message Registration Authority 26 to register the content; by means of said Message Registration Authority 26, creating a new distribution tree 51 for the content having the originator of the message as owner A; and
- forwarding the message to said intended recipient(s).

In embodiments of the invention, the method can further comprise the step of generating said CID by means of a message ID generator scheme.

The invention relates also to a computer program product for use in the inventive arrangement, comprising computer code portions configured to realise functions and performing steps of the present invention.

## Claims

1. An arrangement (20) for digital rights enforcement of a data message initiated by a first user (A) and transferred in a communication network by means of a Message System (10), comprising:
- a Rights Manager (22) communicatively connected to said Message System (10) and configured to receive and process an incoming message initiated by said user (A), and to forward said processed message to a recipient (B, C, D);
- a Message Identifier (24) communicatively connected to said Rights Manager (22) and configured to identify the content of said incoming message;
- an identification generator communicatively connected to said Message Identifier (24) and configured to generate a unique ID for said content, CID;
- means for comparing the identification information to existing content identities comprised in a Message ID database (30);
- a Message Registration Authority (26) communicatively connected to said Rights Manager (22) and configured to register the content ownership and content ID in a Distribution Tree Database (28) and said Message ID database (30), respectively; and
- means for updating said Distribution Tree Database (28) to include the ongoing distribution event if the CID exists in said Message ID Database (30).

2. An arrangement according to claim 1, wherein said Message System (10) is a message-based distribution system such as mail, SMS or MMS, and said data message is, or is an element of, a message from said message-based distribution system.

3. An arrangement according to claim 1 or 2, wherein said Rights Manager (22) is configured to coordinate and call other modules and functions.

4. An arrangement according to any preceding claim, wherein said Identification Generator is configured to generate said CID by means of a message ID generator scheme.

5. An arrangement according to claim 4, wherein said message ID generator scheme comprises digital watermarks, one-way hash functions and/or similarity functions.

6. An arrangement according to any preceding claim, wherein said Message Registration Authority (26) is configured to register previously unseen content which does not have an existing owner.

7. An arrangement according to claim 6, wherein said Message Registration Authority (26) is configured to attach a watermark to said content in cases where digital watermarks are used as CID.

8. An arrangement according to any preceding claim, further comprising a User Database (32) communicatively connected to said Rights manager (22) and configured to comprise user information, such as unique User ID, e.g. IMSI; operator ID; terminal identification Number, e.g. IMEI; terminal capabilities and/or context information.

9. An arrangement according to any preceding claim, wherein the information in said Distribution Tree database (20) can be arranged in a distribution tree (50) configured to show how said content has been distributed from said first user (A) to a second user (B, C, D), and configured to serve as a basis for revenue sharing and reverse billing mechanisms.

10. An arrangement according to any preceding claim, wherein said Message ID Database (30) is configured to comprise identification elements, such as hashes, similarities measures, watermarks etc., for previously registered contents.

11. A method for digital rights enforcement of a data message initiated by a first user (A) and transferred in a communication network by means of a Message System (10), comprising the steps of:
- intercepting said message and sending said message to a Rights Manager (22) for processing;
- by means of a Message Identifier (24), identifying said incoming message and generating a unique content ID, CID;
- performing a lookup of the identification information in a Message ID database (30) to determine whether the content is previously owned by another user;
- if the content is previously owned, updating a Distribution Tree Database (28);
- if the content is new, calling said Message Registration Authority (26) to register the content; by means of said Message Registration Authority (26), creating a new distribution tree (51) for the content having the originator of the message as owner (A); and
- forwarding the message to said intended recipient(s).

12. A method according to claim 11, comprising the step of generating said CID by means of a message ID generator scheme.

13. A method according to claim 12, wherein said message ID generator scheme comprises digital watermarks, one-way hash functions and/or similarity functions.

14. A method according to any of claims 11 - 13, wherein said Message Registration Authority (26) adds digital watermarks to the content to ensure future identification.

15. A method according to any of claims 11 - 14,wherein the information in said Distribution Tree database (20) can be arranged in a distribution tree (50) showing how said content has been distributed from said first user (A) to a second user (B, C, D), and serving as a basis for revenue sharing and reverse billing mechanisms.

16. A method according to any of claims 11 - 15, wherein said Message ID Database (30) comprises identification elements, such as hashes, similarities measures, watermarks etc., for previously registered contents.

17. A computer program product for use in an arrangement according to any of the claims 1 - 10, comprising computer code portions configured to realise functions and performing steps of any of the preceding claims.
